# EUROPÄISCHE PATENTSCHRIFT

(11) **EP 0 649 507 B1**
(45) Veröffentlichungstag und Bekanntmachung des Hinweises auf die Patenterteilung: **08.05.1996**
(21) Anmeldenummer: 93914721.1
(22) Anmeldetag: 24.06.1993
(51) Int. Cl.: F16N 7/36, F16N 31/00, F01D 25/18, F16C 33/10, F16C 33/66

(54) **EINRICHTUNG ZUR ABFÜHRUNG VON SCHMIERMITTEL AUS EINER LAGERANORDNUNG**
DEVIVE FOR DRAINING OF LUBRICANT FROM A BEARING ARRANGEMENT
DISPOSITIF D'EVACUATION DU LUBRIFIANT D'UN PALIER

(30) Priorität: 07.07.1992 EP 92111498
(43) Veröffentlichungstag der Anmeldung: 26.04.1995
(73) Patentinhaber: SIEMENS AKTIENGESELLSCHAFT, D-80333 München (DE)
(72) Erfinder: HAASE, Detlef, D-4330 Mülheim a. d. Ruhr (DE)
(86) Internationale Anmeldenummer: EP9301622
(87) Internationale Veröffentlichungsnummer: WO9401713

(56) Entgegenhaltungen:
- EP-A- 0 306 634
- DE-B- 1 238 723
- DE-C- 378 896
- GB-A- 2 091 356
- US-A- 1 754 904
- US-A- 2 650 671
- US-A- 4 091 905

## Beschreibung

Die Erfindung betrifft eine Einrichtung zur Abführung eines flüssigen Schmiermittels aus einer Lageranordnung für eine um eine Achse rotierende Welle, welche Lageranordnung ein mit dem Schmiermittel beaufschlagtes, die Welle lagerndes Lager und zumindest eine diesem benachbarte Dichtanordnung aufweist, welche eine die Welle umringende Dichtung und einen zwischen dieser und dem Lager liegenden, die Welle umringenden Sammelraum hat, in den das Schmiermittel aus dem Lager entlang der Welle eintritt und aus dem das Schmiermittel durch eine Abflußleitung abgeführt wird.

Die Erfindung bezieht sich insbesondere auf eine Gleitlageranordnung in einer Turbinenanlage, insbesondere in einer Dampfturbinenanlage. Besonderes Augenmerk liegt dabei auf Gleitlageranordnungen, die gegen das Austreten von Schmiermittel möglichst vollständig gesichert sein müssen. Gleitlageranordnungen, welche in Turbinenanlagen verwendbar sind, sowie Verfahren und Einrichtungen zur Abführung flüssiger Schmiermittel, insbesondere Schmieröl, aus solchen Gleitlageranordnungen, gehen aus der EP-B-0 222 991 und der EP-A-0 306 634 hervor. In diesen Schriften sind Gleitlager für Turbomaschinen, insbesondere Dampfturbinen, ausführlich erläutert. Die Einbeziehung solcher Gleitlageranordnungen in Radiallager, Axiallager und kombinierte Radial-Axial-Lager wird ebenfalls vorgestellt.

Ein wesentlicher Bestandteil der gattungsgemäßen Einrichtung ist eine Dichtanordnung zur Abführung von Schmiermittel, welches aus dem eigentlichen Lager austritt und welches in einem entsprechenden Schmiermittelkreislauf gehalten werden soll. Diese Aufgabe ergibt sich bereits aus einfachen ökonomischen Erwägungen sowie Erwägungen zur Vermeidung von Verunreinigungen in der Umgebung der Lageranordnung. Insbesondere in einer Dampfturbinenanlage tritt jedoch ein wesentlicher Aspekt hinzu, nämlich die Verhinderung, daß Schmiermittel in den Dampfkreislauf eindringt, den darin ablaufenden thermodynamischen Prozess beeinträchtigt und darüber hinaus Verunreinigungen und Korrosion veranlassen kann. Insbesondere eine Lageranordnung, die in einer mit Dampf beaufschlagten Umgebung angebracht werden muß, muß praktisch vollständig gegen den Austritt von Schmiermittel gesichert werden; dies insbesondere unter den erheblichen betrieblichen Beanspruchungen, denen Lager in Turbinenanlagen u. dgl. ausgesetzt sind: In Kraftwerksanlagen laufen die Rotoren in den Turbinen mit Drehzahlen von mehreren Tausend Umdrehungen pro Minute (typisch 3000 Umdrehungen pro Minute in Europa und 3600 Umdrehungen pro Minute in Amerika), woraus erhebliche Relativgeschwindigkeiten der in Lageranordnungen aufeinander gleitenden Flächen der Wellen und Lager resultieren. Damit einher gehen sehr hohe Anforderungen an die Beaufschlagung der Lager mit Schmiermittel, woraus wiederum erhebliche Schmiermittelleckagen aus den Lagern resultieren. Die in der EP-B 0 222 991 und der EP-A-0 306 634 vorgestellten Gleitlageranordnungen sind besonders ausgebildet zur Bewältigung dieser Probleme, wobei vor allem eine zügige Abführung der aus den Gleitlagern austretenden Schmiermittelmengen gewährleistet sein soll und darüber hinaus in gewissem Umfang auch eine Abführung von Öl aus den den Gleitlagern zugeordneten Dichtungen erreicht werden soll.

Bei jeder bisher bekannten Lageranordnung wird die Abführung des Schmiermittels aus dem neben dem Lager angeordneten Sammelring im wesentlichen nur durch ein natürliches Gefälle bewerkstelligt, welches durch geeignete Verlegung der Abflußleitungen für das Schmiermittel realisiert wird. Dementsprechend geht die vorliegende Erfindung von folgender Aufgabe aus:

Die Abführung von Schmiermittel aus einer gattungsgemäßen Einrichtung soll insgesamt verbessert werden, wobei der apparative und damit verbundene ökonomische Aufwand nach Möglichkeit gering bleiben soll.

Als erste Lösung dieser Aufgabe angegeben wird eine Einrichtung zur Abführung eines flüssigen Schmiermittels aus einer Lageranordnung für eine um eine Achse rotierende Welle, welche Lageranordnung ein mit dem Schmiermittel beaufschlagtes, die Welle lagerndes Lager und zumindest eine diesem benachbarte Dichtanordnung aufweist, welche eine die Welle umringende Dichtung und einen zwischen dieser und dem Lager liegenden, die Welle umringenden Sammelraum hat, in den das Schmiermittel entlang der Welle aus dem Lager eintritt und aus dem das Schmiermittel durch eine Abflußleitung abgeführt wird, wobei erfindunsgemäß ein in den Sammelraum hineinragender Trichter zum Auffangen des Schmiermittels und Abführen des Schmiermittels in die Abflußleitung vorgesehen ist.

Der Trichter ist vorzugsweise in unmittelbarer Nähe der Welle angeordnet.

Als zweite Lösung der Aufgabe angegeben wird eine Einrichtung zur Abführung eines flüssigen Schmiermittels aus einer Lageranordnung für eine um eine Achse rotierende Welle, welche Lageranordnung ein mit dem Schmiermittel beaufschlagtes, die Welle lagerndes Lager und zumindest eine diesem benachbarte Dichtanordnung aufweist, welche eine die Welle umringende Dichtung und einen zwischen dieser und dem Lager liegenden, die Welle umringenden Sammelraum hat, in den das Schmiermittel entlang der Welle aus dem Lager eintritt und aus dem das Schmiermittel durch eine Abflußleitung abgeführt wird, wobei erfindungsgemäß der Sammelraum eine bezüglich der Achse etwa gerade Wand hat, welche senkrecht zur Achse einen Querschnitt hat, der von zumindest einem die Achse umlaufenden Spiralenabschnitt und einem die Wand schließenden Zwischenabschnitt gebildet ist, und die Abflußleitung im Bereich des Zwischenabschnittes in die Wand einmündet.

Die erste Lösung und die zweite Lösung können auch miteinander kombiniert werden, wozu in einem Sammelraum mit einer Wand, die aus zumindest einem Spiralenabschnitt und zumindest einem Zwischenabschnitt gebildet ist, in erwähnter Weise ein Trichter vorzusehen wäre, der im Bereich des Zwischenabschnitts in die Abflußleitung mündet.

Erfindungsgemäß wird der Impuls ausgenutzt, der dem Schmiermittel in dem Sammelraum von der rotierenden Welle mitgeteilt wird. Die Übertragung des Impulses geschieht teilweise durch Reibung und teilweise durch das von der rotierenden Welle tangential abgeschleuderte Schmiermittel; dieses Schmiermittel trifft auf Schmiermittel, welches sich auf der radialen Wand des Sammelraums befindet und teilt diesem Schmiermittel seinen Impuls mit. Insgesamt ergibt sich so eine Strömung des Schmiermittels um die Achse herum in derselben Drehrichtung, in der die Welle sich dreht. Erfindungsgemäß wird diese Drehströmung in dem Sammelraum aufgefangen und ohne wesentlichen Geschwindigkeitsverlust, also ohne Geschwindigkeitsverlust außer den unvermeidbaren Reibungsverlusten, welche durch die Viskosität des Schmiermittels bedingt sind, aus dem Sammelraum abgeführt. Die Wechselwirkung zwischen der rotierenden Welle und dem in dem Sammelraum befindlichen Schmiermittel wird erfindungsgemäß genutzt, um das Schmiermittel aus dem Sammelraum herauszufördern.

Besonders vorteilhaft ist es, wenn das Schmiermittel etwa senkrecht nach unten aus dem Sammelraum abgeführt wird, da auf diese Weise zusätzlich zu der Pumpwirkung der rotierenden Welle die Schwerkraft zur Abführung des Schmiermittels beiträgt.

Erfindungsgemäß wird eine wesentliche Abbremsung des von der rotierenden Welle in Bewegung versetzten Schmiermittels vermieden. Der Impuls des Schmiermittels wird nicht erst durch einen Aufprall o. dgl. neutralisiert, um dann mittels entsprechend leistungsfähiger Pumpeinrichtungen o. dgl. eine Abführung zu bewerkstelligen, sondern das in schnelle Bewegung versetzte Schmiermittel wird durch entsprechende Mittel aufgefangen und unmittelbar einer Abflußleitung zugeführt, wobei der Impuls des Schmiermittels wesentlich ausgenutzt wird.

Ein zum Auffangen des Schmiermittels in den Sammelraum hineinragender Trichter hat vorzugsweise eine etwa in einer bezüglich der Welle radialen Ebene ausgerichtete Mündung.

Günstig ist es auch, die den Sammelraum umfangende, bezüglich der Achse im wesentlichen etwa gerade ausgerichtete Wand des Sammelraums mit einem spiralförmigen Querschnitt auszuführen, so daß dieser Querschnitt einen die Achse im wesentlichen einmal vollständig umlaufenden Spiralenabschnitt und einen die von dem Spiralenabschnitt dargestellte Kurve schließenden Zwischenabschnitt, welcher etwa radial ausgerichtet ist, aufweist.

Es sei bemerkt, daß die Wand möglicherweise auch mit mehreren Spiralenabschnitten und mehreren Zwischenabschnitten gestaltbar ist, insbesondere zwei Spiralenabschnitten, deren jeder die Achse im wesentlichen zur Hälfte umläuft, und mit zwei Zwischenabschnitten, deren jeder die beiden Spiralenabschnitte miteinander verbindet. Sinngemäß sind auch Einrichtungen mit vielzähligen Spiralenabschnitten und Zwischenabschnitten ausführbar. Solche Gestaltungen empfehlen sich insbesondere dann, wenn relativ große Mengen an Schmiermittel den Sammelraum durchsetzen müssen.

Wie bereits erwähnt, kann erfindungsgemäß das aus dem Sammelraum abgeführte Schmiermittel einer Strahlpumpe zugeführt werden und in dieser Strahlpumpe als Treibmittel dienen. In diesem Sinne ist günstigerweise an den Sammelraum eine Injektionsleitung zur Abführung des Schmiermittels angeschlossen, welche Injektionsleitung mit der Abflußleitung eine Strahlpumpe bildet, wobei die Injektionsleitung eine Treibmittelleitung darstellt. Somit kann in der Abflußleitung eine Sogwirkung erzeugt werden, welche im Rahmen der erfindungsgemäßen Einrichtung oder auch anderweitig vorteilhaft ausnutzbar ist.

An eine Abflußleitung, welche in erwähnter Weise zu einer Strahlpumpe gehört, ist vorteilhafterweise eine erste Saugleitung angeschlossen, welche zur Absaugung eines Fluides, insbesondere Schmiermittel, Dampf, Wasser, Luft oder Gemische daraus, mit der Dichtung kommuniziert. Auf diese Weise kann der Durchsatz von Schmiermittel durch die Dichtung verringert werden, und es ist eine wesentliche Verbesserung der Dichtwirkung erzielbar. Dies ist vor allem wichtig bei Lageranordnungen in Turbinenanlagen, welche von Dampf oder Kondensat umspült sind und aus thermodynamischen Gründen gegen das Austreten von Schmiermittel geschützt werden müssen.

An eine mit einer Abflußleitung gebildete Strahlpumpe kann im Rahmen einer günstigen Weiterbildung auch eine zweite Saugleitung angeschlossen werden, welche zur Absaugung eines Fluides, insbesondere Schmiermittel, Dampf, Wasser oder Luft, mit dem Sammelraum kommuniziert. Somit wird eine zweite Möglichkeit geschaffen, aus dem Sammelraum Schmiermittel abzuführen, was einer Staugefahr für das Schmiermittel in dem Sammelraum wirksam vorbeugt und Schmiermittel, welches von den erfindungsgemäßen zum Auffangen bei hoher Geschwindigkeit nicht erfaßt wurde, aus dem Sammelraum entfernt, womit die Funktion der erfindungsgemäßen Auffangmittel dadurch unterstützt wird, daß diese von sich langsam bewegendem Schmiermittel freigehalten werden.

Wie bereits erwähnt, eignet sich die erfindungsgemäße Einrichtung im Rahmen jedweder Ausgestaltung besonders zur Ertüchtigung einer Gleitlageranordnung, vorzugsweise in einer Turbinenanlage, insbesondere einer Dampfturbinenanlage. Die Einrichtung ist besonders geeignet zur Anwendung in hochbelasteten Turbinenanlagen in Kraftwerken u. dgl.; besonders eignet sie sich zur Ertüchtigung einer Gleitlageranordnung in einem Stirnlager einer Turbinenanlage, welches Stirnlager in einem von Dampf erfüllten Dampfraum der Turbinenanlage angeordnet ist.

Es sei noch darauf hingewiesen, daß eine Lageranordnung selbstverständlich weitere Komponenten neben den bisher erwähnten haben kann. So ist es denkbar, ein Lager auf jeder axialen Seite mit einem Sammelraum und einer Dichtung zu versehen. Weiterhin sei bemerkt, daß insbesondere in vielen Dampfturbinenanlagen die Dichtungen in Lageranordnungen mehrteilig und/oder strukturiert sind. So liegen, entlang der Welle gesehen, zwischen dem Inneren einer Turbine und dem Lager vielfach mehrere Dichtabschnitte, zwischen denen Räume angeordnet sind, die je nach Ausgestaltung und Funktion mit Dampf beaufschlagt, evakuiert oder belüftet werden. Dies alles dient dem Ziel, in jeder Teildichtung einen Leckstrom mit bestimmten Eigenschaften, insbesondere definierter Größe, definierter Richtung und definierter Zusammensetzung, entstehen zu lassen und diese Leckströme an bestimmten Stellen aus der Dichtung auszuleiten und einer ihrer jeweiligen Zusammensetzung entsprechenden weiteren Behandlung zuzuführen.

Die Erfindung ist im Hinblick auf die weitere Ausgestaltung der Lageranordnung nicht auf besondere Ausführungsformen beschränkt.

Die weitere Erläuterung der Erfindung folgt anhand der in der Zeichnung dargestellten Ausführungsbeispiele. Zur Verdeutlichung der spezifischen Merkmale der Erfindung ist die Zeichnung teilweise schematisiert und/oder leicht verzerrt ausgeführt. Im einzelnen zeigen:
- Figur 1: einen Querschnitt durch eine erfindungsgemäße Einrichtung im Bereich des Sammelraums;
- Figur 2: einen Längsschnitt durch die in Fig. 1 gezeigte Einrichtung;
- Figur 3 und Figur 4: jeweils einen Querschnitt durch eine erfindungsgemäße Einrichtung im Bereich des Sammelraums.

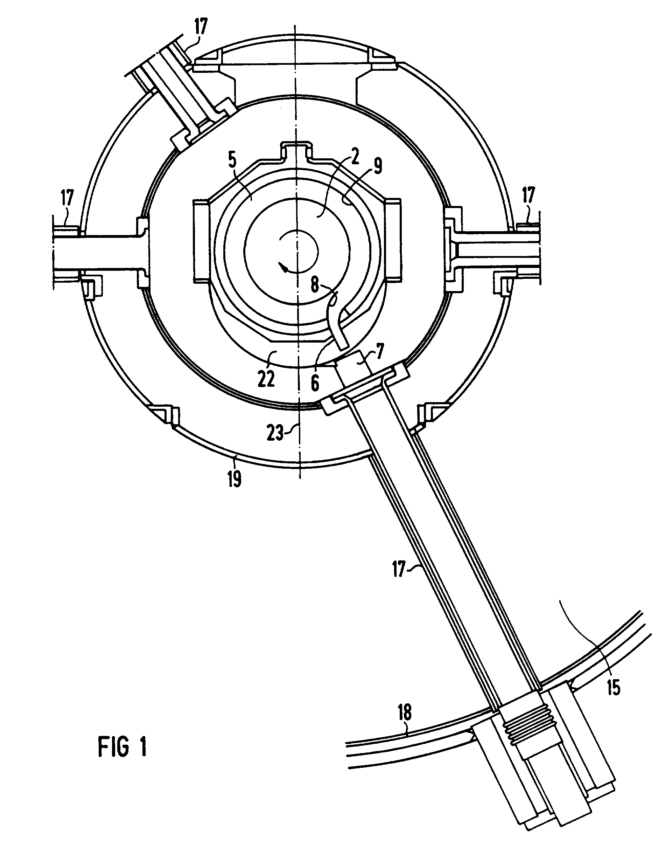

Wie aus Figur 1 ersichtlich, ist in einer erfindungsgemäßen Einrichtung die Welle 2 in der Nähe eines nicht dargestellten Lagers, insbesondere eines Gleitlagers, und der gleichfalls nicht dargestellten Dichtung umringt von einem Sammelraum 5, in welchem Schmiermittel, das entlang der Welle 2 aus dem Lager austritt, gesammelt wird. In dem Sammelraum 5 strömt das Schmiermittel um die rotierende Welle 2 herum in demselben Drehsinn, in dem die Welle 2 rotiert. Die Strömung des Schmiermittels wird in Gang gehalten teilweise durch Reibung an der rotierenden Welle 2 und teilweise dadurch, daß Schmiermittel, welches tangential von der Welle 2 abgeschleudert wird, sich mit dem über die Wand 9 des Sammelraums 5 fließenden Schmiermittel vereinigt und diesem seinen Impuls mitteilt. Erfindungsgemäß wird das Schmiermittel in dem Sammelraum 5 aufgefangen von einem Trichter 8 und ohne wesentlichen Geschwindigkeitsverlust durch eine Injektionsleitung 6 in eine Abflußleitung 7 geleitet. Die Abflußleitung 7 ist etwa senkrecht ausgerichtet, um zur Abführung des Schmiermittels auch die Schwerkraft auszunutzen. Die senkrechte Richtung ist durch die Vertikallinie 23 angedeutet. Mit der Abflußleitung 7 wird das Schmiermittel weiteren, nicht darge-stellten Förder- und Sammeleinrichtungen zugeführt, welche in der Regel Teile eines im wesentlichen geschlossenen Kreislaufs für das Schmiermittel sind. Zum Aufbau des Schmiermittelkreislaufs sind alle bekannten Komponenten in üblicher Weise einsetzbar. Unter dem Sammelraum 5 befindet sich ein Ablaufraum 22, in dem Schmiermittel aufgefangen werden kann, das nicht in den Trichter 8 gelangt. Dies ist deswegen von Bedeutung, weil es in der Regel nicht gelingt, mit einer Einrichtung wie dem Trichter 8 das in den Sammelraum 5 eintretende Schmiermittel vollständig aufzufangen; in der Regel ist zu erwarten, daß ein beachtlicher Teil des Schmiermittels nicht in den Trichter 8 gelangt und somit durch andere Maßnahmen abgeführt werden muß. Hierfür kann beispielsweise unterhalb des Sammelraums 5 ein Ablaufraum 22 vorgesehen werden, der durch (nicht dargestellte) Bohrungen o. dgl. in der Wand 9 mit dem Sammelraum 5 kommuniziert und aus dem das Schmiermittel durch die Abflußleitung 7 oder eine hierfür besonders vorgesehene andere Leitung abführbar ist. Das in Figur 1 dargestellte Lager ist ein Lager für eine Dampfturbinenanlage und ist in einem mit Dampf erfüllten Dampfraum 15 untergebracht. Das Lager ist umgeben von einem Lagergehäuse 19 und wird von Trägern 17 im Außengehäuse 18 der Dampfturbinenanlage gehalten.

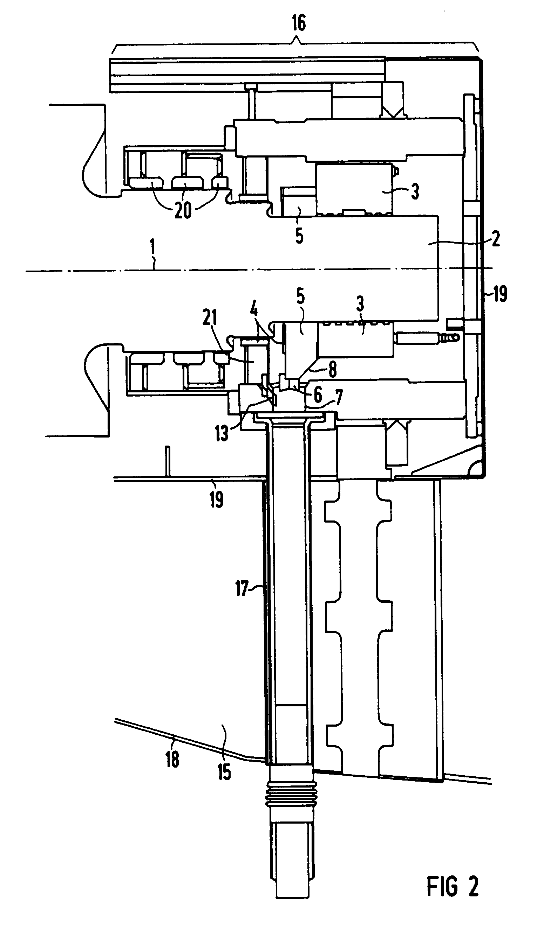

Der weitere Aufbau einer Lageranordnung wie derjenigen, von der in Figur 1 ein Querschnitt dargestellt ist, geht aus Figur 2 hervor. Eine Welle 2 ist um eine Achse 1 drehbar und ist gelagert in einem Gleitlager 3, das über nicht dargestellte Einrichtungen mit Schmiermittel, in der Regel Schmieröl, beaufschlagt wird. Da in aller Regel ein Gleitlager 3 wie jedes andere Lager nicht vollständig dicht ausgeführt werden kann, tritt Schmiermittel entlang der Welle 2 aus dem Gleitlager 3 aus. Damit dieses austretende Schmiermittel nicht unkontrolliert die Lageranordnung oder deren Umgebung verschmutzt und möglicherweise funktionell beeinträchtigt, ist zum Auffangen dieses Schmiermittels eine besondere Dichtung 4, beispielsweise eine Labyrinthdichtung, die ggf. auch mehrteilig sein kann, vorgesehen. Zwischen dem Gleitlager 3 und der Dichtung 4 ist darüber hinaus ein die Welle 2 umringender Sammelraum 5 vorgesehen, in dem das aus dem Gleitlager 3 austretende Schmiermittel gesammelt und aus dem es abgeführt wird. Wie anhand von Fig. 1 dargestellt, wird das Schmiermittel in dem Sammelraum 5 von einem Trichter 8 aufgefangen (in Figur 2 ist dieser Trichter nur andeutungsweise zu sehen) und durch eine Injektionsleitung 6 der Abflußleitung 7 zugeführt. Die Injektionsleitung 6 und die Abflußleitung 7 bilden zusammen eine Strahlpumpe und erzeugen eine Sogwirkung; diese Sogwirkung wird gemäß Fig. 2 dazu benutzt, um einerseits Schmiermittel aus der Umgebung des Gleitlagers 3 abzusaugen und andererseits über eine erste Saugleitung 13 aus einem zu der Dichtung 4 gehörigen Saugraum 21, welcher über nicht dargestellte Bohrungen o. dgl. mit der Dichtung 4 kommuniziert, Schmiermitteldünste, Luft und evtl. eingetretene andere Fluide abzusaugen. Zusätzlich zu der Dichtung 4, welche vor allem den Zweck der Abschottung anderer Bereiche der ausschnittsweise dargestellten Turbinenanlage von Schmiermitteln hat, sind an der Welle 2 Zusatzdichtungen 20 vorgesehen. Diese Zusatzdichtungen 20 dienen dazu, Dampf aus der Turbinenanlage von der Lageranordnung fernzuhalten. Die weitere Ausbildung der Zusatzdichtungen 20 kann entsprechend den Hinweisen des Standes der Technik erfolgen.

Die in Figur 2 dargestellte Lageranordnung bildet ein Stirnlager 16, welches in einem Dampfraum 15 einer Dampfturbinenanlage angeordnet ist. Über Träger 17 wird das Stirnlager 16 in dem Dampfraum 15 gehalten. Der dargestellte Träger 17 ist hohl, und die Abflußleitung 7 ist durch ihn hindurchgeführt. Zur Fernhaltung des Dampfes von der Lageranordnung ist das Stirnlager 16 umgeben von einem Lagergehäuse 19.

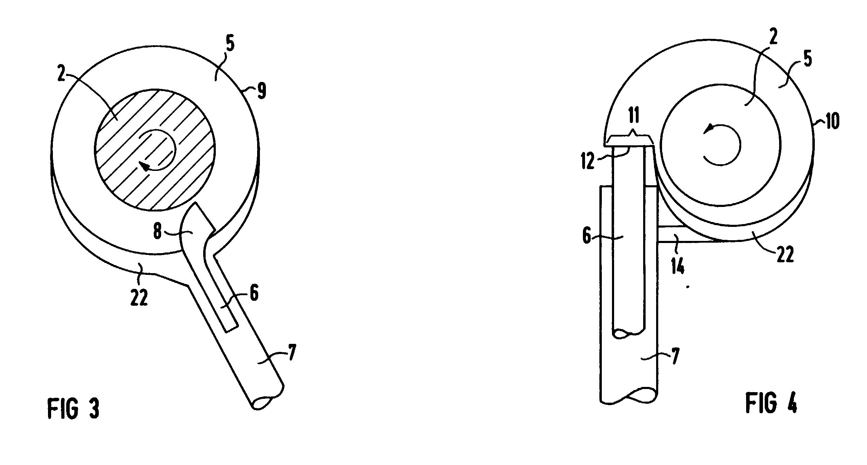

Figur 3 zeigt in schematisierter Weise eine erste Ausführungsform eines Mittels zum Auffangen des Schmiermittels in einem Sammelraum 5. Der Sammelraum 5 umringt eine rotierende Welle 2; der Drehsinn der rotierenden Welle 2 ist als gebogener Pfeil dargestellt. Die Wand 9 des Sammelraums 5 hat im wesentlichen einen kreisförmigen Querschnitt. In dem Sammelraum 5 angeordnet ist ein Trichter 8, welcher bis in die unmittelbare Nähe der Welle 2 reicht und welcher das von der Welle 2 abgeschleuderte Schmiermittel auffängt und durch die Injektionsleitung 6 in die Abflußleitung 7 lenkt. Außer dem unmittelbar von der Welle 2 abgeschleuderten Schmiermittel fängt der Trichter 8 auch zumindest einen Teil des Schmiermittels auf, welches entlang der Wand 9 fließt und angetrieben wird von dem auf die Wand 9 auftreffenden, von der Welle 2 abgeschleuderten Schmiermittel. Um auch die von dem Trichter 8 nicht aufgefangenen Mengen an Schmiermittel abzuführen, kommuniziert der Sammelraum 5 mit einem Ablaufraum 22, in den das Schmiermittel aus dem Sammelraum 5 durch (nicht dargestellte) Bohrungen oder Schlitze in der Wand 9 eintreten kann. Aus dem Ablaufraum 22 kann das Schmiermittel unmittelbar der Abflußleitung 7 zuströmen, was durch die Sogwirkung unterstützt wird, welche entsteht in der aus der Injektionsleitung 6 und der Abflußleitung 7 gebildeten Strahlpumpe, in der das von dem Trichter 8 aufgefangene Schmiermittel das Treibmittel bildet.

Eine andere Ausbildung des Sammelraums ist dargestellt in Fig. 4. Die Wand des Sammelraums 5, welche im wesentlichen parallel zur (aus der Zeichenebene herausführenden) Achse, um welche die Welle 2 rotiert, liegt, besteht aus einem Spiralenabschnitt 10 und einem den Spiralenabschnitt 10 schließenden Zwischenabschnitt 11, welcher im wesentlichen radial ausgerichtet ist. Die Wand des Sammelraums 5 hat im Bereich des Zwischenabschnitts 11 eine Mündung 12, an welche die Injektionsleitung 6 angeschlossen ist. Wiederum ist unter dem Sammelraum 5 ein Ablaufraum 22 angeordnet, welcher durch eine an die Abflußleitung 7 angeschlossene zweite Saugleitung 14 entleerbar ist. Wiederum bilden die Abflußleitung 7 und die Injektionsleitung 6 eine Strahlpumpe.

Gemäß der Erfindung ist die Abführung von Schmiermittel aus einer Lageranordnung möglich unter Ausnutzung des Impulses, welcher dem abzuführenden Schmiermittel von der in der Lageranordnung rotierenden Welle vermittelt wird. Eine apparativ wenig aufwendige und wirkungsvolle Abführung von Schmiermittel ist damit gesichert.

## Patentansprüche

1. Einrichtung zur Abführung eines flüssigen Schmiermittels aus einer Lageranordnung für eine um eine Achse (1) rotierende Welle (2), welche Lageranordnung ein mit dem Schmiermittel beaufschlagtes, die Welle (2) lagerndes Lager (3) und zumindest eine diesem benachbarte Dichtanordnung (4,5) aufweist, welche eine die Welle (2) umringende Dichtung (4) und einen zwischen dieser und dem Lager (3) liegenden, die Welle (2) umringenden Sammelraum (5) hat, in den das Schmiermittel entlang der Welle (2) aus dem Lager (3) eintritt und aus dem das Schmiermittel durch eine Abflußleitung (7) abgeführt wird,
**gekennzeichnet durch**
einen in den Sammelraum (5) hineinragenden Trichter (8) zum Auffangen des Schmiermittels und Abführen des Schmiermittels in die Abflußleitung(7).

2. Einrichtung nach Anspruch 1, bei der der Trichter (8) in unmittelbarer Nähe der Welle (2) angeordnet ist.

3. Einrichtung zur Abführung eines flüssigen Schmiermittels aus einer Lageranordnung für eine um eine Achse (1) rotierende Welle (2), welche Lageranordnung ein mit dem Schmiermittel beaufschlagtes, die Welle (2) lagerndes Lager (3) und zumindest eine diesem benachbarte Dichtanordnung (4,5) aufweist, welche eine die Welle (2) umringende Dichtung (4) und einen zwischen dieser und dem Lager (3) liegenden, die Welle (2) umringenden Sammelraum (5) hat, in den das Schmiermittel entlang der Welle (2) aus dem Lager (3) eintritt und aus dem das Schmiermittel durch eine Abflußleitung (7) abgeführt wird, insbesondere nach Anspruch 1 oder 2,
**dadurch gekennzeichnet, daß**
der Sammelraum (5) eine bezüglich der Achse (1) etwa gerade Wand (9) hat, welche senkrecht zur Achse (1) einen Querschnitt hat, der von zumindest einem die Achse (1) umlaufenden Spiralenabschnitt (10) und einem die Wand (9) schließenden Zwischenabschnitt (11) gebildet ist, und die Abflußleitung(7) im Bereich des Zwischenabschnitts (11) in die Wand (9) einmündet.

4. Einrichtung nach einem der vorhergehenden Ansprüche, bei der die Abflußleitung (7) etwa senkrecht ausgerichtet ist.

5. Einrichtung nach einem der vorhergehenden Ansprüche, bei der an den Sammelraum (5) eine Injektionsleitung (6) zur Abführung des Schmiermittels angeschlossen ist, welche Injektionsleitung (6) mit der Abflußleitung (7) eine Strahlpumpe (6, 7) mit der Injektionsleitung (6) als Treibmittelleitung darstellt.

6. Einrichtung nach Anspruch 5, bei der an die Abflußleitung (7) eine erste Saugleitung (13) angeschlossen ist, welche zur Absaugung eines Fluides, insbesondere Schmiermittel, Dampf, Wasser oder Luft, mit der Dichtung (4) kommuniziert.

7. Einrichtung nach Anspruch 5 oder 6, bei der an die Abflußleitung (7) eine zweite Saugleitung (14) angeschlossen ist, welche zur Absaugung eines Fluides, insbesondere Schmiermittel, Dampf, Wasser oder Luft, mit dem Sammelraum (5) kommuniziert.

8. Einrichtung nach einem der vorhergehenden Ansprüche, welche zu einer Lageranordnung in einer Turbinenanlage, insbesondere einer Dampfturbinenanlage, gehört.

9. Einrichtung nach Anspruch 8, bei der die Lageranordnung ein in einem Dampfraum (15) der Turbinenanlage angeordnetes Stirnlager (16) ist.

10. Einrichtung nach einem der vorhergehenden Ansprüche, bei der das Lager (3) ein Gleitlager (3) ist.

## Claims

1. Device for the removal of a liquid lubricant from a bearing arrangement for a shaft (2) rotating about an axis (1), which bearing arrangement has a bearing (3), which supports the shaft (2) and to which the lubricant is admitted, and at least one sealing arrangement (4, 5) adjacent to the said bearing (3), which sealing arrangement has a seal (4) surrounding the shaft (2) and a collecting space (5), which is located between the said seal (4) and the bearing (3) and surrounds the shaft (2), into which collecting space (5) the lubricant enters along the shaft (2) from the bearing (3) and from which the lubricant is led away through a drain conduit (7), characterised by a funnel (8), which protrudes into the collecting space (5), for catching the lubricant and leading the lubricant into the drain conduit (7).

2. Device according to Claim 1, in which the funnel (8) is arranged in the immediate vicinity of the shaft (2).

3. Device for the removal of a liquid lubricant from a bearing arrangement for a shaft (2) rotating about an axis (1), which bearing arrangement has a bearing (3), which supports the shaft (2) and to which the lubricant is admitted, and at least one sealing arrangement (4, 5) adjacent to the said bearing (3), which sealing arrangement has a seal (4) surrounding the shaft (2) and a collecting space (5), which is located between the said seal (4) and the bearing (3) and surrounds the shaft (2), into which collecting space (5) the lubricant enters along the shaft (2) from the bearing (3) and from which the lubricant is led away through a drain conduit (7), in particular according to Claim 1 or 2, characterized in that the collecting space (5) has a wall (9) which is approximately straight relative to the axis (1) which has, at right angles to the axis (1), a cross-section which is formed by at least one spiral section (10) passing round the axis (1) and an intermediate section (11) closing the wall (9), and the drain conduit (7) opens into the wall (9) in the region of the intermediate section (11).

4. Device according to one of the preceding claims, in which the drain conduit (7) is directed approximately vertically.

5. Device according to one of the preceding Claims, in which an injection conduit (6) for the removal of the lubricant is connected to the collecting space (5), which injection conduit (6), together with the drain conduit (7), represents a jet pump (6, 7) with the injection conduit (6) as the driving medium conduit.

6. Device according to Claim 5, in which a first suction conduit (13) is connected to the drain conduit (7), which first suction conduit communicates with the seal (4) in order to extract a fluid, in particular lubricant, steam, water or air.

7. Device according to Claim 5 or 6, in which a second suction conduit (14) is connected to the drain conduit (7), which second suction conduit communicates with the collecting space (5) in order to extract a fluid, in particular lubricant, steam, water or air.

8. Device according to one of the preceding Claims, which is associated with a bearing arrangement in a turbine installation, in particular a steam turbine installation.

9. Device according to Claim 8, in which the bearing arrangement is an end journal bearing (16) arranged in a steam space (15) of the turbine installation.

10. Device according to one of the preceding claims, in which the bearing (3) is a sliding bearing (3).

## Revendications

1. Dispositif pour évacuer un lubrifiant liquide à partir d'un dispositif de palier pour un arbre (2) tournant autour d'un axe (1), lequel dispositif de palier comporte un palier (3), qui reçoit le lubrifiant et supporte l'arbre (2), et au moins un dispositif d'étanchéité (4,5) voisin de ce palier et qui comporte une garniture d'étanchéité (4) qui entoure l'arbre (2) et une chambre de collecte (5) qui est située entre cette garniture d'étanchéité et le palier (3) et entoure l'arbre (2) et dans laquelle le lubrifiant pénètre le long de l'arbre (2) en sortant du palier (3) et à partir de laquelle le lubrifiant est évacué par une canalisation d'évacuation (7), caractérisé par un entonnoir (8) pénétrant dans la chambre de collecte (5) pour recevoir le lubrifiant et évacuer ce dernier dans la canalisation d'évacuation (7).

2. Dispositif selon la revendication 1, dans lequel l'entonnoir (8) est disposé à proximité directe de l'arbre (2).

3. Dispositif pour évacuer un lubrifiant liquide à partir d'un dispositif de palier pour un arbre (2) tournant autour d'un axe (1), lequel dispositif de palier comporte un palier (3), qui reçoit le lubrifiant et supporte l'arbre (2), et au moins un dispositif d'étanchéité (4,5) voisin de ce palier et qui comporte une garniture d'étanchéité (4) qui entoure l'arbre (2) et une chambre de collecte (5) qui est située entre cette garniture d'étanchéité et de palier (3) et entoure l'arbre (2) et dans laquelle le lubrifiant pénètre le long de l'arbre (2) en sortant du palier (3) et à partir de laquelle le lubrifiant est évacué par une canalisation d'évacuation (7), notamment selon la revendication 1 ou 2, caractérisé en ce que la chambre de collecte (5) possède une paroi (9) approximativement rectiligne par rapport à l'axe (1) et qui possède perpendiculairement à l'axe (1) une section transversale, qui est formée par au moins une partie en spirale (10), qui s'enroule autour de l'axe (1), et par une partie intercalaire (11), qui se raccorde à la paroi (9), et que la canalisation d'évacuation (7) débouche dans la paroi (9), dans la zone de la partie intercalaire (11).

4. Dispositif selon l'une des revendications précédentes, dans lequel la canalisation d'évacuation (7) est dirigée approximativement verticalement.

5. Dispositif selon l'une des revendications précédentes, dans lequel à la chambre de collecte (5) se raccorde une canalisation d'injection (6) servant à évacuer le lubrifiant, laquelle canalisation d'injection (6) représente, avec la canalisation d'évacuation (7), une pompe à jet (6,7) comportant la canalisation d'injection (6) en tant que canalisation de fluide moteur.

6. Dispositif selon la revendication 5, dans lequel à la canalisation d'évacuation (7) est raccordée une première canalisation d'aspiration (13), qui communique avec la garniture d'étanchéité (4) pour aspirer un fluide, notamment un lubrifiant, de la vapeur, de l'eau ou de l'air.

7. Dispositif selon la revendication 5 ou 6, dans lequel à la canalisation d'évacuation (7) est raccordée une seconde canalisation d'aspiration (14), qui communique avec la chambre de collecte (5) pour l'aspiration d'un fluide, notamment un lubrifiant, de la vapeur, de l'eau ou de l'air.

8. Dispositif selon l'une des revendications précédentes, qui fait partie d'un dispositif de palier situé dans une installation de turbine, notamment une installation de turbine à vapeur.

9. Dispositif selon la revendication 8, dans lequel le dispositif de palier est un palier frontal (16) monté dans une chambre à vapeur (15) de l'installation de turbine.

10. Dispositif selon l'une des revendications précédentes, dans lequel le palier (3) est un palier lisse (3).
